# EUROPEAN PATENT APPLICATION

(11) **EP 2 101 399 A1**
(43) Date of publication of application: **16.09.2009**
(21) Application number: 09154524.4
(22) Date of filing: 06.03.2009
(51) Int. Cl.: H02M 1/12

(54) **Boost converter input ripple current reduction circuit**

(30) Priority: 11.03.2008 US 75588
(71) Applicant: General Electric Company, Schenectady, NY 12345 (US)
(72) Inventor: Schutten, Michael Joseph, Rotterdam, NY 12303 (US); Steigerwald, Robert Louis, Burnt Hills, NY 12027 (US); Glaser, John Stanley, Niskayuna, NY 12309 (US); Sabate, Juan Antonio, Gansevoort, NY 12831 (US); De Rooij, Michael Andrew, Schenectady, NY 12309 (US)
(74) Representative: Bedford, Grant Richard

(57) **Abstract**

A boost inductor value reduction circuit (12) is integrated into a traditional boost power converter (10) to greatly reduce undesirable high frequency harmonics from being fed back to the input side of the boost power converter (10). The boost inductor value reduction circuit (12) is very small when compared with traditional filter techniques, is less costly than traditional filter techniques, and does not degrade the boost power converter control performance. It can also be used to reduce the size of the boost inductor (18) without compromising the converter performance for use in energy efficient sensitive applications such as photovoltaic inverters.

## Description

The invention relates generally to boost power converters, and more specifically to a system and method to reduce the input filter size of a boost power converter.

Boost power converters are used in many different applications to provide a high power factor to an AC power line, and/or to provide a regulated DC bus for specific power applications. A significant problem inherent with such boost power converters is related to high frequency harmonics associated with the boost power converter switching frequency fed back to the boost power converter input (i.e. AC power line). These high frequency harmonics are generally required by certain regulatory agencies to be attenuated by factors of 100 or more to meet the requisite regulatory levels. High frequency can also stress capacitors by means of internal heating and dielectric material breakdown.

Known boost power converters have traditionally employed large bulky filtering techniques, systems and devices to reduce boost power converter input side switching harmonics. Such techniques, system and devices have generally been very large and expensive since the filtering is required to be very effective at low frequencies (i.e. 100's of kHz). These filtering techniques often become so large, that the interaction between the filter and boost power converter can create undesirable stability problems. These filters are large also because all components carry full current.

It would be both advantageous and beneficial to provide a method and system to reduce undesirable high frequency harmonics fed back to the input side of a boost power converter in a manner that is significantly smaller and less costly than traditional boost power converter switching frequency filters.

Briefly, in accordance with one embodiment of the invention, a boost inductor value reduction circuit is configured to substantially reduce the size and inductance value of a boost converter boost inductor that provides a predetermined level of boost converter performance when the boost converter is operating in a continuous conduction mode, such that the reduced inductance boost inductor in combination with the boost inductor value reduction circuit maintains substantially the same predetermined boost converter performance level as that provided by the boost converter operating in the absence of the boost inductor value reduction circuit, and such that the boost converter maintains substantially the same performance level when operating in a continuous conduction mode, in a bounded conduction mode, or in a discontinuous conduction mode.

According to another embodiment of the invention, a boost inductor value reduction circuit is configured to substantially reduce the size and inductance value of a boost converter boost inductor that is configured to limit a boost converter input ripple current value when the boost converter is operating in a continuous conduction mode, such that the reduced inductance boost inductor in combination with the boost inductor value reduction circuit maintains substantially the same boost converter input ripple current value as that provided by the boost converter operating in the continuous conduction mode in the absence of the boost inductor value reduction circuit, and such that the boost converter maintains substantially the same performance level when operating in a continuous conduction mode, in a bounded conduction mode, or in a discontinuous conduction mode.

According to yet another embodiment of the invention, a boost inductor value reduction circuit is configured to substantially reduce the size of a boost converter input filter that is operational to limit a boost converter input ripple current value when the boost converter is operating in a continuous conduction mode, such that the reduced size boost converter input filter in combination with the boost inductor value reduction circuit maintains substantially the same boost converter input ripple current value as that provided by the boost converter operating in the continuous conduction mode in the absence of the boost inductor value reduction circuit, and such that the boost converter maintains substantially the same performance level when operating in a continuous conduction mode, in a bounded conduction mode, or in a discontinuous conduction mode.

Various features, aspects, and advantages of the present invention will become better understood when the following detailed description is read with reference to the accompanying drawings in which like characters represent like parts throughout the drawings, wherein:
Figure 1 illustrates a boost converter including a boost inductor value reduction circuit according to one embodiment of the invention;
Figure 2 is a graph illustrating an AC line current waveform associated with a high power factor boost converter, but that does not have a boost inductor value reduction circuit such as depicted in Figure 1;
Figure 3 is a graph illustrating an AC line current waveform associated with a high power factor boost converter that includes a boost inductor value reduction circuit such as depicted in Figure 1;
Figure 4 is a graph illustrating conducted EMI associated with a high power factor boost converter, but that does not have a boost inductor value reduction circuit such as depicted in Figure 1;
Figure 5 is a graph illustrating conducted EMI associated with a high power factor boost converter that includes a boost inductor value reduction circuit such as depicted in Figure 1; and
Figure 6 illustrates a boost converter including a boost inductor value reduction circuit that forms one portion of a photovoltaic inverter, according to another embodiment of the invention.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

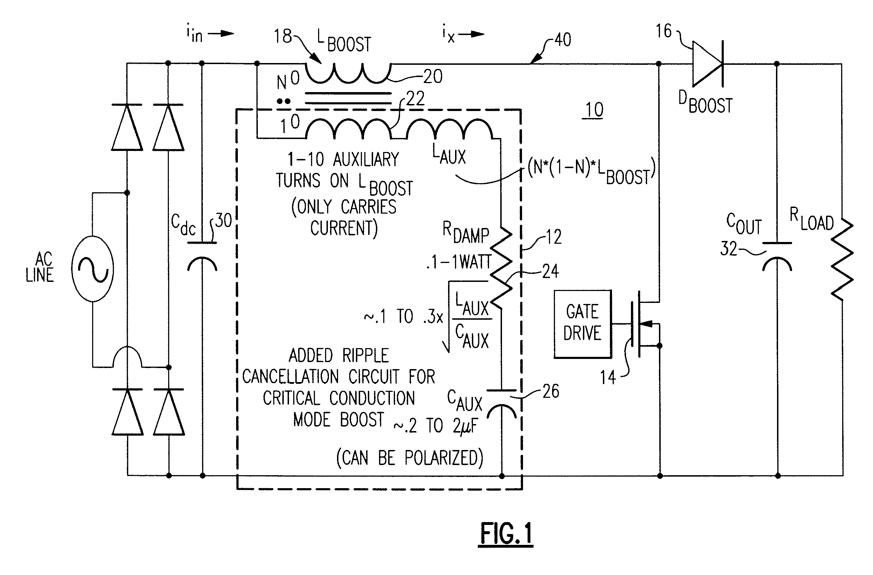

Figure 1 illustrates a boost converter 10 including a boost inductor value reduction circuit 12 according to one embodiment of the invention. The boost inductor value reduction circuit 12 is a lightweight, inexpensive and compact ripple cancellation circuit when compared to traditional filter structures. Boost inductor value reduction circuit 12 operates to create a high frequency current signal that substantially cancels the high frequency ripple current conducted back to the AC line input side of the boost converter 10 that is generated by the boost converter 10 switching components. Boost converter 10 switching components can be seen to include a MOSFET 14 and a boost diode 16, according to one embodiment.

Although boost converter 10 is depicted as having an AC line input, the present embodiments are not so limited; and it shall be understood that the principles described herein apply equally well to a boost converter having a DC input source.

Boost inductor value reduction circuit 12 creates a ripple current signal that is substantially equal to and opposite in phase to the high frequency input ripple created by the boost converter switching components 14, 16, such that the high frequency input ripple created by the boost converter 10 switching components 14, 16 is substantially canceled by the high frequency ripple signal created by the boost inductor value reduction circuit 12.

Although certain aspects of the invention are described in association with a boost converter operating in a critical conduction mode where the switching frequency changes considerably over a single AC line waveform, the present invention is not so limited. The boost inductor value reduction circuit 12 can also achieve the desired results in accordance with the principles described herein when applied to a boost converter operating in either a continuous conduction mode or a discontinuous conduction mode. One embodiment was found to achieve greater than a 30dB reduction in EMI conducted back to the input of the boost converter, when using a boost inductor value reduction circuit according to the principles described herein.

According to one embodiment, a boost inductor value reduction circuit transformer component 18 is implemented simply by adding one or more low current windings on an existing boost converter inductor 20. The resultant auxiliary inductor 22 carries only an opposing high frequency ripple current, and has a much lower inductance than the boost converter inductor 20.

Boost inductor value reduction circuit 12 also includes a small wattage damping resistor 24 and a small microfarad auxiliary capacitor 26. According to one aspect, auxiliary capacitor 26 sees only a unipolar voltage across it during operation; and so capacitor 26 can be a low cost aluminum electrolytic capacitor with a large ESR that desirably contributes to damping according to one embodiment.

One 80 watt critical conduction mode boost converter was found to have a switching frequency that varied from about 20 kHz when the AC magnitude was near its peak to about 100 kHz when the AC line voltage was small. A 0.22 microfarad DC link capacitor 30 was found suitable to help reduce the harmonics reflected back to the AC line for the critical conduction mode boost converter using an 800 micro Henry boost inductor 20 and a 220 microfarad output capacitor 32.

The auxiliary capacitor 26 and auxiliary inductor 22 are together selected according to one embodiment, to provide a workable filter corner frequency such that the boost inductor value reduction circuit 12 operates to reduce all critical conduction mode boost switching harmonics reflected back to the AC line, above the corner frequency. The boost inductor value reduction circuit 12 is therefore not tuned to a particular frequency, but provides broadband attenuation.

Boost inductor value reduction circuit 12 also operates in association with a boost converter running discontinuous conduction mode or continuous conduction mode to provide the desired ripple cancellation effects according to the principles described herein, as stated herein before. More specifically, the boost inductor value reduction circuit 12 operates to reduce high frequency harmonics for a rectified sinewave input voltage, a DC input voltage, or any other input voltage that has a low frequency relative to the power switching frequency.

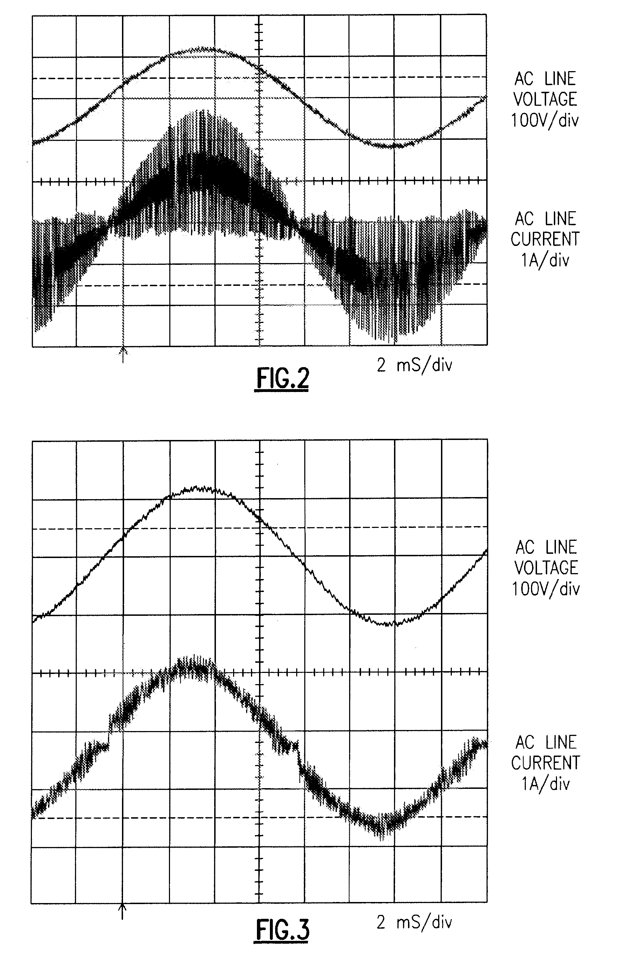

Looking now at Figure 2, a graph illustrates one AC line input current waveform associated with a high power factor boost converter that does not have a boost inductor value reduction circuit such as depicted in Figure 1. Most of the filtering is provided by the capacitor 30 which results in a substantial ripple current as seen in the AC line current waveform on the bottom portion of Figure 2.

Figure 3 is a graph illustrating one AC line current waveform associated with a high power factor boost converter that includes a boost inductor value reduction circuit such as depicted in Figure 1. The magnitude of the ripple current shown in the lower half of Figure 3 is much smaller than the ripple current seen in the lower half of Figure 2 that depicts the AC line input current waveform associated with a high power factor boost converter that does not have a boost inductor value reduction circuit such as depicted in Figure 1.

The improvement in ripple current reduction achieved by using a boost inductor value reduction circuit such as depicted in Figure 1 is however, even better than first appears in the Figures, since the remaining ripple voltage depicted in Figure 3 is predominantly due to frequencies between about 20 kHz and about 100 kHz. These remaining harmonics are below the EMI requirements for either the U.S. (FCC 15/18) or Europe (CIRSR 11/22).

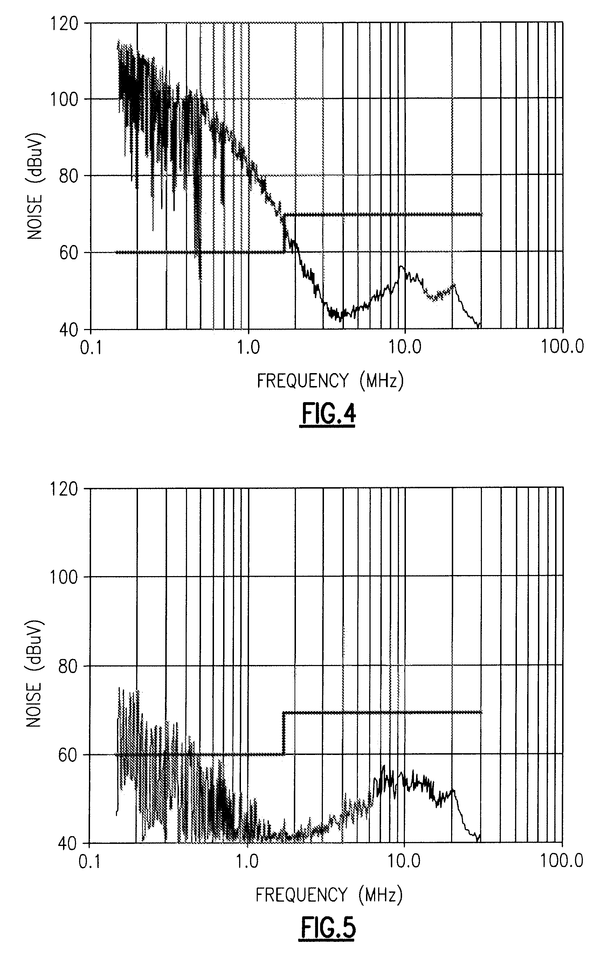

Figure 4 is a graph illustrating one conducted EMI/high frequency AC line current from about 150 kHz to about 30 MHz for a high power factor boost converter that does not have a boost inductor value reduction circuit such as depicted in Figure 1.

Figure 5 is a graph illustrating one conducted EMI/high frequency AC line current from about 150 kHz to about 30 MHz for a high power factor boost converter that includes a boost inductor value reduction circuit such as depicted in Figure 1. A comparison between the high frequency AC line current depicted in Figure 4 and the high frequency AC line current depicted in Figure 5 shows there is almost a 40 dB EMI reduction in the low frequency range where filtering is most difficult. The high frequency AC line currents depicted in Figures 4 and 5 were measured using a LISN as required by FCC and CISPR testing requirements.

In summary explanation, a very compact, low cost boost inductor value reduction circuit has been described that greatly reduces the undesirable high frequency currents associated with boost converter switching frequencies and that are limited by EMI regulations in order to alleviate system interference and other difficulties. The boost inductor value reduction circuit, according to one embodiment, creates a continuous input side current for a critical conduction mode boost converter, while maintaining the MOSFET side current in critical conduction mode. This feature substantially eliminates diode switching losses generally associated with boost converters, and also eliminates input side conducted EMI problems.

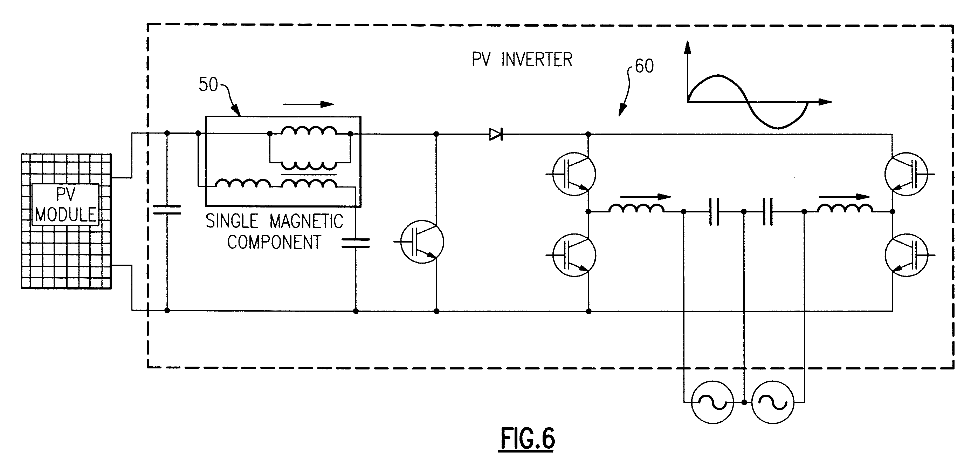

Figure 6 illustrates a boost converter including a boost inductor value reduction circuit 50 that forms one portion of a photovoltaic (PV) inverter 60, according to another embodiment of the invention. Boost inductor value reduction circuit 50 is implemented as a single magnetic component according to one aspect of the invention. Boost inductor value reduction circuit 50 is useful not only for reducing the overall size of the associated boost converter boost inductor, such as described above, but also for reducing the level of ripple current, and therefore noise, at the input to the PV inverter 60. This feature advantageously helps prevent the transmission of noise in many PV array systems in which the PV array system can become a source of transmitted noise.

A further advantage provided by the boost inductor value reduction circuit 50 is directed to efficiency improvement. Reducing the boost inductor value and physical size results in a PV inverter efficiency increase regardless of losses associated with the boost inductor value reduction circuit 50. This is possible because the performance of the PV inverter is maintained and the power loss density of the boost inductor with the boost inductor value reduction circuit 50 is maintained. A small physical inductor with the same power loss density as the original inductor will therefore inherently have lower losses. A balance can then be found with the main boost switching device as the losses begin to shift into the form of increased turn-off switching losses.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are now defined by the following numbered clauses:
1. A boost inductor value reduction circuit configured to substantially reduce the size and inductance value of a boost converter boost inductor that provides a predetermined level of boost converter performance when the boost converter is operating in a continuous conduction mode, such that the reduced inductance boost inductor in combination with the boost inductor value reduction circuit maintains substantially the same predetermined boost converter performance level as that provided by the boost converter operating in the absence of the boost inductor value reduction circuit, and such that the boost converter maintains substantially the same performance level when operating in a continuous conduction mode, in a bounded conduction mode, or in a discontinuous conduction mode.
2. The boost inductor value reduction circuit according to clause 1, further configured to reduce the inductance value of the boost converter boost inductor between about 50% and about 200% of its original value, while maintaining substantially the same performance level as the original inductance value associated with the boost converter operating in the absence of the boost inductor value reduction circuit and when the boost converter is operating in the continuous conduction mode.
3. The boost inductor value reduction circuit according to any preceding clause, wherein the boost inductor value reduction circuit is further configured in combination with an inverter to generate an output signal in response to a photovoltaic array module.
4. The boost inductor value reduction circuit according to any preceding clause, wherein the boost inductor value reduction circuit and the reduced size boost converter boost inductor are together configured to substantially increase the overall efficiency of the photovoltaic inverter beyond that achievable by the photovoltaic inverter in the absence of the boost inductor value reduction circuit, regardless of losses associated with the boost inductor value reduction circuit.
5. The boost inductor value reduction circuit according to any preceding clause, wherein the circuit comprises an auxiliary inductor configured to carry a high frequency ripple current that opposes a ripple current passing through the boost converter boost inductor.
6. The boost inductor value reduction circuit according to any preceding clause, wherein the auxiliary inductor has a substantially lower inductance than the boost converter boost inductor.
7. The boost inductor value reduction circuit according to any preceding clause, wherein the circuit is further configured to provide a desired corner filter frequency such that the circuit reduces substantially all boost converter switching harmonics above the corner filter frequency reflected back to a boost converter source input line to provide a desired broadband attenuation characteristic.
8. The boost inductor value reduction circuit according to any preceding clause, wherein the circuit is further configured to reduce EMI conducted back to the input side of the boost converter that is generated by high frequency switching components at an output side of the boost converter.
9. A boost inductor value reduction circuit configured to substantially reduce the size and inductance value of a boost converter boost inductor that is configured to limit a boost converter input ripple current value when the boost converter is operating in a continuous conduction mode, such that the reduced inductance boost inductor in combination with the boost inductor value reduction circuit maintains substantially the same boost converter input ripple current value as that provided by the boost converter operating in the continuous conduction mode in the absence of the boost inductor value reduction circuit, and such that the boost converter maintains substantially the same performance level when operating in a continuous conduction mode, in a bounded conduction mode, or in a discontinuous conduction mode.
10. The boost inductor value reduction circuit according to clause 9, further configured to reduce the inductance value of the boost converter boost inductor between about 50% and about 200% of its original value, while maintaining substantially the same boost converter input ripple current level as the original inductance value associated with the boost converter operating in the absence of the boost inductor value reduction circuit and when the boost converter is operating in the continuous conduction mode.
11. The boost inductor value reduction circuit according to clause 9 or 10, wherein the boost inductor value reduction circuit is further configured in combination with an inverter to generate an output signal in response to a photovoltaic array module.
12. The boost inductor value reduction circuit according to any of clauses 9 to 11, wherein the boost inductor value reduction circuit and the reduced size boost converter boost inductor are together configured to substantially increase the overall efficiency of the photovoltaic inverter beyond that achievable by the photovoltaic inverter in the absence of the boost inductor value reduction circuit, regardless of losses associated with the boost inductor value reduction circuit.
13. The boost inductor value reduction circuit according to any of clauses 9 to 12, wherein the circuit is further configured to reduce high frequency harmonics for any input voltage having a low frequency relative to the ripple current frequency.
14. The boost inductor value reduction circuit according to any of clauses 9 to 13, wherein the circuit comprises an auxiliary inductor configured to carry a high frequency ripple current that opposes a ripple current passing through the boost converter boost inductor.
15. The boost inductor value reduction circuit according to any of clauses 9 to 14, wherein the auxiliary inductor has a substantially lower inductance than the boost converter boost inductor.
16. The boost inductor value reduction circuit according to any of clauses 9 to 15, wherein the circuit is further configured to provide a desired corner filter frequency such that the circuit reduces substantially all boost converter switching harmonics above the corner filter frequency reflected back to a boost converter source input line to provide a desired broadband attenuation characteristic.
17. The boost inductor value reduction circuit according to any of clauses 9 to 16, wherein the circuit is further configured to reduce EMI conducted back to the input side of the boost converter that is generated by high frequency switching components at an output side of the boost converter.
18. A boost inductor value reduction circuit configured to substantially reduce the size of a boost converter input filter that is operational to limit a boost converter input ripple current value when the boost converter is operating in a continuous conduction mode, such that the reduced size boost converter input filter in combination with the boost inductor value reduction circuit maintains substantially the same boost converter input ripple current value as that provided by the boost converter input filter when the boost converter operating in the continuous conduction mode in the absence of the boost inductor value reduction circuit, and such that the boost converter maintains substantially the same performance level when operating in a continuous conduction mode, in a bounded conduction mode, or in a discontinuous conduction mode.
19. The boost inductor value reduction circuit according to clause 18, further configured to reduce the inductance value of the boost converter boost inductor between about 50% and about 200% of its original value, while maintaining substantially the same boost converter input ripple current value as the original inductance value associated with the boost converter operating in the absence of the boost inductor value reduction circuit and when the boost converter is operating in the continuous conduction mode.
20. The boost inductor value reduction circuit according to clause 18 or 19, wherein the boost inductor value reduction circuit is further configured in combination with an inverter to generate an output signal in response to a photovoltaic array module.
21. The boost inductor value reduction circuit according to any of clauses 18 to 20, wherein the boost inductor value reduction circuit and the reduced size boost converter boost inductor are together configured to substantially increase the overall efficiency of the photovoltaic inverter beyond that achievable by the photovoltaic inverter in the absence of the boost inductor value reduction circuit, regardless of losses associated with the boost inductor value reduction circuit.
22. The boost inductor value reduction circuit according to any of clauses 18 to 21, wherein the circuit is further configured to reduce high frequency harmonics for any input voltage having a low frequency relative to the ripple current frequency.
23. The boost inductor value reduction circuit according to any of clauses 18 to 22, wherein the circuit comprises an auxiliary inductor configured to carry a ripple current that opposes a ripple current passing through the boost converter boost inductor.
24. The boost inductor value reduction circuit according to any of clauses 18 to 23, wherein the circuit is further configured to provide a desired corner filter frequency such that the circuit reduces substantially all boost converter switching harmonics above the corner filter frequency reflected back to a boost converter source input line to provide a desired broadband attenuation characteristic.
25. The boost inductor value reduction circuit according to any of clauses 18 to 24, wherein the circuit is further configured to reduce EMI conducted back to the input side of the boost converter that is generated by high frequency switching components at an output side of the boost converter, such that the reduction in EMI conducted back to the input side of the boost converter is substantially greater than that achievable when using the boost converter without the boost inductor value reduction circuit.

## Claims

1. A boost inductor value reduction circuit (12) configured to substantially reduce the size and inductance value of a boost converter boost inductor (18) that provides a predetermined level of boost converter performance when the boost converter (10) is operating in a continuous conduction mode, such that the reduced inductance boost inductor (18) in combination with the boost inductor value reduction circuit (12) maintains substantially the same predetermined boost converter performance level as that provided by the boost converter (10) operating in the absence of the boost inductor value reduction circuit (12), and such that the boost converter (10) maintains substantially the same performance level when operating in a continuous conduction mode, in a bounded conduction mode, or in a discontinuous conduction mode.

2. The boost inductor value reduction circuit (12) according to claim 1, further configured to reduce the inductance value of the boost converter boost inductor (18) between about 50% and about 200% of its original value, while maintaining substantially the same performance level as the original inductance value associated with the boost converter (10) operating in the absence of the boost inductor value reduction circuit (12) and when the boost converter (10) is operating in the continuous conduction mode.

3. The boost inductor value reduction circuit (12) according to any preceding claim, wherein the boost inductor value reduction circuit (12) is further configured in combination with an inverter (10) to generate an output signal in response to a photovoltaic array module.

4. The boost inductor value reduction circuit (12) according to any preceding claim, wherein the boost inductor value reduction circuit (12) and the reduced size boost converter boost inductor (18) are together configured to substantially increase the overall efficiency of the photovoltaic inverter beyond that achievable by the photovoltaic inverter in the absence of the boost inductor value reduction circuit (12), regardless of losses associated with the boost inductor value reduction circuit (12).

5. The boost inductor value reduction circuit (12) according to any preceding claim, wherein the circuit (12) comprises an auxiliary inductor (22) configured to carry a high frequency ripple current that opposes a ripple current passing through the boost converter boost inductor (18).

6. The boost inductor value reduction circuit (12) according to claim 5, wherein the auxiliary inductor (22) has a substantially lower inductance than the boost converter boost inductor (18).

7. The boost inductor value reduction circuit (12) according to any preceding claim, wherein the circuit (12) is further configured to provide a desired corner filter frequency such that the circuit (12) reduces substantially all boost converter switching harmonics above the corner filter frequency reflected back to a boost converter source input line to provide a desired broadband attenuation characteristic.

8. The boost inductor value reduction circuit (12) according to any preceding claim, wherein the circuit (12) is further configured to reduce EMI conducted back to the input side of the boost converter (10) that is generated by high frequency switching components at an output side of the boost converter (10).

9. A boost inductor value reduction circuit (12) configured to substantially reduce the size of a boost converter input filter that is operational to limit a boost converter input ripple current value when the boost converter (10) is operating in a continuous conduction mode, such that the reduced size boost converter input filter in combination with the boost inductor value reduction circuit (12) maintains substantially the same boost converter input ripple current value as that provided by the boost converter input filter when the boost converter (10) is operating in the continuous conduction mode in the absence of the boost inductor value reduction circuit (12), and such that the boost converter (10) maintains substantially the same performance level when operating in a continuous conduction mode, in a bounded conduction mode, or in a discontinuous conduction mode.

10. The boost inductor value reduction circuit (12) according to claim 9, wherein the boost inductor value reduction circuit is further configured in combination with an inverter (60) to generate an output signal in response to a photovoltaic array module such that the boost inductor value reduction circuit and the reduced size boost converter boost inductor are together configured to substantially increase the overall efficiency of the photovoltaic inverter beyond that achievable by the photovoltaic inverter in the absence of the boost inductor value reduction circuit, regardless of losses associated with the boost inductor value reduction circuit.
